# EUROPÄISCHE PATENTSCHRIFT

(11) **EP 2 133 235 B1**
(45) Veröffentlichungstag und Bekanntmachung des Hinweises auf die Patenterteilung: **23.03.2011**
(21) Anmeldenummer: 09007439.4
(22) Anmeldetag: 05.06.2009
(51) Int. Cl.: B60Q 1/26, B60Q 1/04

(54) **Vorrichtung zum Befestigen einer Leuchteneinheit an einem Fahrzeug**
Device for securing a lighting unit to a motor vehicle
Dispositif de fixation d'une unité d'éclairage sur un véhicule

(30) Priorität: 13.06.2008 DE 102008030031
(43) Veröffentlichungstag der Anmeldung: 16.12.2009
(73) Patentinhaber: odelo GmbH, 71409 Schwaikheim (DE)
(72) Erfinder: Ricking, Thorsten, 71364 Winnenden (DE); Kutterer, Achim, 70197 Suttgart (DE)
(74) Vertreter: Kaufmann, Ursula Josefine

(56) Entgegenhaltungen:
- WO-A-2004/065171
- DE-A1- 3 431 032
- FR-A- 2 334 485

## Beschreibung

Die Erfindung betrifft eine Vorrichtung zum mindestens teilweisen Befestigen einer Leuchteneinheit an einem Fahrzeug nach dem Oberbegriff des Anspruchs 1.

Aus der DE 103 48 228 A1 ist eine als Heckleuchte ausgeführte Leuchteneinheit für ein Fahrzeug bekannt, deren Leuchtengehäuse über eine gattungsgemäße Vorrichtung an der Karosserie des Fahrzeugs angebracht ist. Die Vorrichtung umfasst ein Haltemittel, das ein erstes Halteelement und ein mit dem ersten Halteelement zusammenwirkendes, zweites Halteelement aufweist. Das erste Halteelement ist als Bolzen ausgeführt, der in einem entsprechend ausgebildeten Aufnahmeraum im zweiten Halteelement aufgenommen ist. Zur Befestigung des ersten Halteelements am zweiten Halteelement ist im Aufnahmeraum ein Binde/Klebemittel eingebracht. Das Binde/Klebemittel ist mittels Mikrowellen aktivierbar und anschließend aushärtbar.

Aus der WO 2004/065171 A ist eine Vorrichtung zum Befestigen einer Leuchteneinheit an einem Fahrzeug bekannt, welche ein Haltemittel umfasst, das ein erstes Halteelement und ein mit dem ersten Halteelement zusammenwirkendes, zweites Halteelement aufweist. Das erste Halteelement ist in einem Binde/Klebemittel enthaltenden Aufnahmeraum des zweiten Halteelements mindestens teilweise aufgenommen. Das Binde/Klebemittel ist mittels Induktion von innen heraus erwärmbar, wodurch das Binde/Klebemittel aushärtet. Zur Erwärmung durch Induktion sind im Binde-/Klebemittel Nanoferrite enthalten.

In ähnlicher Weise wird in der FR 2 334 485 A vorgegangen. Dort ist ein Verfahren zum stoffschlüssigen Fügen von Fügeteilen aus thermoplastischem Kunststoff offenbart. Ein als Verlierteil ausgebildetes und Verankerungszonen aufweisendes Verbindungselement wird zwischen Fügezonen der Fügeteile angeordnet und über die Schmelztemperatur des thermoplastischen Kunststoffs erhitzt, wodurch das Verbindungselement in der Schmelze versinkt. Das Verbindungselement kann als metallische Wendel ausgeführt sein, welches z.B. durch Induktion erwärmt werden kann.

Der Erfindung liegt die Aufgabe zugrunde, eine Vorrichtung zum mindestens teilweisen Befestigen einer Leuchteneinheit an einem Fahrzeug bereitzustellen, welche einfach und schnell herstellbar ist.

Diese Aufgabe wird erfindungsgemäß mit den kennzeichnenden Merkmalen des Patentanspruchs 1 gelöst.

Die Erfindung geht aus von einer Vorrichtung zum mindestens teilweisen Befestigen einer Leuchteneinheit an einem Fahrzeug mit einem Haltemittel, das ein erstes Halteelement und ein mit dem ersten Halteelement zusammenwirkendes, zweites Halteelement aufweist, wobei das erste Halteelement in einem Binde/Klebemittel enthaltenden Aufnahmeraum des zweiten Halteelements mindestens teilweise aufgenommen ist. Bei der erfindungsgemäßen Vorrichtung ist vorgesehen, dass das Binde/Klebemittel mittels induktiver Erwärmung erwärmbar und damit aktivierbar ist. Dabei ist das Binde/Klebemittel über die induktive Erwärmung des ersten Halteelements erwärmbar und damit aktivierbar. Das erste Haltemittel ist aus einem metallischen Werkstoff gebildet.

Bevorzugt können Bauteile erwärmt werden, die beispielsweise in einem weiteren Material, wie beispielsweise Kunststoff eingebettet sind. Hierdurch ergeben sich in vorteilhafter Weise vollständig ausgehärtete Klebebereiche im Aufnahmeraum des zweiten Halteelements. Insbesondere ist die Erwärmung bzw. die Aktivierung des Binde/Klebemittels im Aufnahmeraum unabhängig von der Geometrie des ersten Haltemittels. Die Klebung kann unter stabilen Prozessbedingungen erfolgen. Zudem treten keine Verbrennungserscheinungen auf, wodurch Ausschussteile weitgehend vermieden werden.

Vorteilhaft kann der Bolzen und/oder im Binde/Klebemittel enthaltene insbesondere ferromagnetische Elemente oder Partikel durch Induktion erwärmt werden. Diese Elemente oder Partikel können z.B. ferromagnetische Metallspäne sein oder z.B. Nanopartikel. Vorteilhaft kann die Induktion mittels Mikrowelleneinstrahlung erfolgen.

Hierdurch kann die Wärme viel schneller zugeführt werden als mit herkömmlichen Verfahren. Mit der induktiven Erwärmung ist die Wärme, die dem Binde/Klebemittel zugeführt werden soll, sehr genau dosierbar. In vorteilhafter Weise ist hierdurch der Einsatz bei Klebemittelvolumina mit großer Klebemitteldicke möglich. Die großen Klebemittelvolumina wiederum ermöglichen eine vier- bzw. fünfdimensionale Ausrichtung des ersten Halteelements im Aufnahmeraum des zweiten Halteelements und dadurch einen vier- bzw. fünfdimensionalen Toleranzausgleich bei der Fertigung von Leuchteinheiten von Fahrzeugen, wobei mit vier- bzw. fünfdimensional die Raumrichtungen x, y, z sowie zwei Winkel gemeint sind. Es ergibt sich der Vorteil einer sehr schnellen Aushärtung, was in vorteilhafter Weise geringere Zykluszeiten bei der Fertigung von Leuchteneinheiten für Fahrzeuge nach sich zieht. Insbesondere ergibt sich eine sehr homogene Klebemittelschicht nach dem Aushärten. D.h. es wird ein homogenes Klebemittelverhalten über die gesamte Länge des ersten Halteelements erzeugt. Ferner ergibt sich ein einfacher Aufbau einer das Verfahren durchführenden Einrichtung, da beispielsweise keine Abschirmung der Klebemittelstelle zur Umgebung hin notwendig ist.

Bevorzugt ist das zweite Halteelement zur induktiven Erwärmung des ersten Halteelements von einer Induktionsspule beaufschlagbar. Hierdurch ergibt sich in vorteilhafter Weise eine einfach zu handhabende sowie kostengünstige Möglichkeit zur Erwärmung des ersten Halteelements.

In einer vorteilhaften Ausgestaltung der Vorrichtung ist das erste Halteelement von einer pyrometrischen Temperaturmesseinrichtung zu beaufschlagen, welche die Leistung der Induktionsspule regelt. In besonders vorteilhafter Weise erlaubt die erfindungsgemäße Vorrichtung eine sehr genaue und einfach zu verwirklichende Temperaturregelung. Die Ausgestaltung der Vorrichtung ermöglicht ein induktives Erwärmen des ersten Halteelements anhand eines vorgegebenen Induktionstemperaturprofils, wodurch sich in vorteilhafter Weise eine blasenfreie, homogene Klebstoffstruktur im Aufnahmeraum des zweiten Halteelements ergibt. Insbesondere wird Ausschuss weitgehend vermieden, da es keine Verbrennungserscheinungen gibt.

Vorzugsweise ist das erste Halteelement bei aktiviertem Binde/Klebemittel im Aufnahmeraum stoffschlüssig gehalten. Hierdurch wird auf einfache und wirkungsvolle Weise ermöglicht, dass das erste Halteelement sicher im Aufnahmeraum des zweiten Halteelements gehalten wird.

Bevorzugt ist das erste Haltemittel als Bolzen ausgeführt. Diese Ausgestaltung ermöglicht eine einfache Herstellbarkeit des ersten Haltemittels sowie eine stabile Verbindung zwischen erstem und zweitem Halteelement.

In weiterer Ausgestaltung der Vorrichtung ist das zweite Haltemittel als an der Leuchteneinheit ausgebildeter Dom ausgeführt, in welchem der Aufnahmeraum angeordnet ist.

Vorzugsweise weist der Bolzen einen Auflageflansch auf. Bei dem Flansch handelt es sich um eine Auflagefläche gegenüber einer Fahrzeugkarosserie im eingebauten Zustand der Leuchteneinheit, vorzugsweise einer Heckleuchte. Die Eintauchtiefe des Bolzens im Dom wird hierdurch nicht beeinträchtigt. Ein Toleranzausgleich in alle Richtungen bleibt so erhalten, da dieser vorzugsweise stets variabel sein muss.

In einer vorteilhaften Ausgestaltung der Vorrichtung besteht das erste Halteelement aus mindestens einem metallischen Werkstoff. Günstigerweise ist hierdurch der Einsatz eines einfachen, kostengünstigen Bauteils, insbesondere eines Normteils möglich.

In weiterer Ausgestaltung der Vorrichtung besteht das zweite Halteelement aus mindestens einem Kunststoff. Hierdurch ist eine sowohl konstruktiv als auch herstellungstechnisch einfache Realisierung des zweiten Halteelements möglich.

Bevorzugt handelt es sich bei dem Binde/Klebemittel um einen vorzugsweise warmaushärtenden Epoxid-Klebstoff. In vorteilhafter Weise ermöglicht dieser Klebstoff bei einem Induktionsverfahren eine blasenfreie Klebstoffstruktur. Das Binde/Klebemittel kann vorzugsweise indirekt erwärmt und damit aktiviert werden. Die indirekte Erwärmung erfolgt vorzugsweise durch induktive Erwärmung des ersten Haltemittels und/oder durch induktive Erwärmung von im Binde/Klebemittel enthaltenen Metallpartikeln, insbesondere von im Binde/Klebemittel enthaltenen ferromagnetischen Partikeln. Zur Verbesserung der Wärmeleitfähigkeit kann das Binde/Klebemittel auch Metallpartikel, z.B. Aluminiumpartikel, enthalten.

Weitere Vorteile der Erfindung ergeben sich aus den weiteren Ansprüchen, der Beschreibung und der Zeichnung.

Anhand von einem in der Zeichnung dargestellten bevorzugten Ausführungsbeispiel wird die Erfindung nachfolgend näher beschrieben. In den Figuren werden gleiche oder im Wesentlichen gleich bleibende Elemente mit den gleichen Bezugszeichen versehen.

Es zeigen:
- Fig. 1: in einem Schnitt eine erfindungsgemäße Vorrichtung zum mindestens teilweisen Befestigen einer Leuchteneinheit an einem Fahrzeug mit einem Haltemittel, das ein erstes Halteelement und ein mit dem ersten Halteelement zusammenwirkendes, zweites Halteelement aufweist, und
- Fig. 2: einen Ausschnitt der Vorrichtung in einer perspektivischen Darstellung mit dem in dem zweiten Halteelement aufgenommenen ersten Halteelement, wobei das erste Halteelement von einer pyrometrischen Temperaturmesseinrichtung und das zweite Halteelement von einer Induktionsspule beaufschlagt ist.

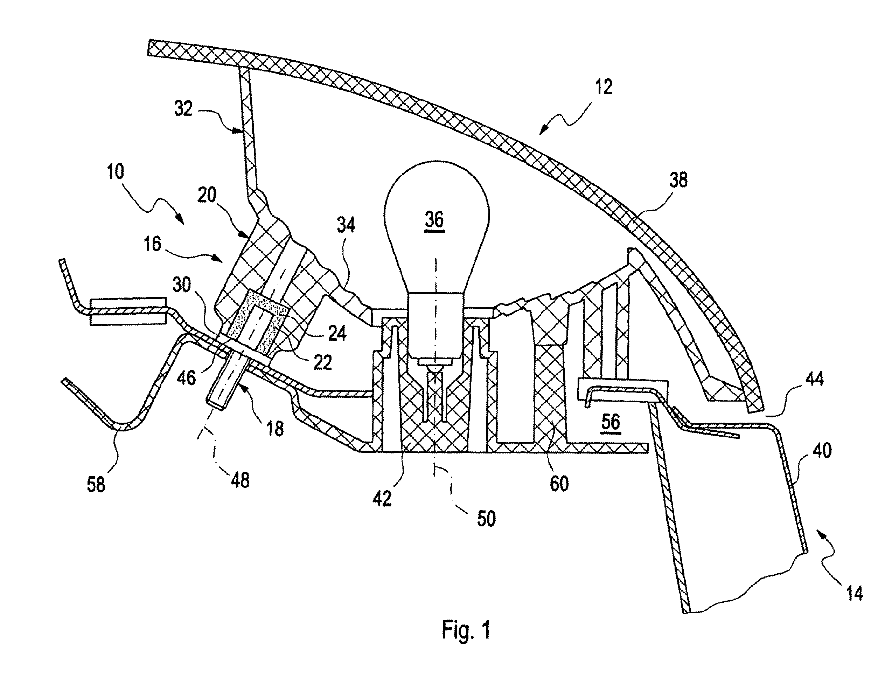

Fig. 1 zeigt einen Schnitt durch eine erfindungsgemäße Vorrichtung 10 zum mindestens teilweisen Befestigen einer Leuchteneinheit 12 an einem Fahrzeug 14. Im vorliegenden Ausführungsbeispiel handelt es sich bei der Leuchteneinheit 12 um die Heckleuchte des Fahrzeugs 14. Die Leuchteneinheit 12 umfasst ein Leuchtengehäuse 32, in dem sich ein Reflektor 34 und ein Leuchtmittel 36, wie beispielsweise eine Glühlampe oder eine LED befinden. Ferner weist das Leuchtengehäuse 32 eine Lichtaustrittsscheibe 38 auf, durch welche das vom Leuchtmittel 36 ausgestrahlte Licht nach außen strahlt. Die Leuchteneinheit 12 ist mit ihrem Leuchtengehäuse 32 über die erfindungsgemäße Vorrichtung 10 an einer Karosserie 40 des Fahrzeugs 14 mindestens teilweise befestigbar. Selbstverständlich kann die Leuchteneinheit 12 außer über mindestens eine erfindungsgemäße Vorrichtung 10 auch über weitere, einem Fachmann als sinnvoll erscheinende Befestigungsvorrichtungen, wie beispielsweise Schraub- oder Clipsverbindungen, am Fahrzeug 14 bzw. an der Karosserie 40 des Fahrzeugs 14 befestigt werden.

Der Reflektor 34 ist im vorliegenden Ausführungsbeispiel in das Leuchtengehäuse 32 integriert, welches mit der Lichtaustrittsscheibe 38 in bekannter Weise verschweißt ist. Das Leuchtengehäuse 32 und die Lichtaustrittsscheibe 38 bilden mit der Karosserie 40 des Fahrzeugs 14 einen vorgegebenen Spalt 44, der über den Umfang der Leucheneinheit 12 eine konstante geringe Breite aufweist. Das Leuchtengehäuse 32 befindet sich vor einer Einbauöffnung 56 in der Karosserie 40. Hinter der Einbauöffnung 56 befindet sich ein Anschlussteil 58, das die Einbauöffnung 56 in der Einbaulage der Vorrichtung 10 von der Rückseite aus abdeckt. Vom Anschlussteil 58 stehen Rippen 60 ab, die durch die Einbauöffnung 56 ragen und auf denen das Leuchtengehäuse 32 aufliegt. Das Anschlussteil 58 bildet eine in die Einbauöffnung 56 ragende Fassung 42 aus, in welcher das Leuchtmittel 36 aufgenommen ist, wobei über die Fassung 42 in bekannter Weise der Strom zugeführt wird.

Die Leuchteneinheit 12 wird mit der erfindungsgemäßen Vorrichtung 10 mindestens teilweise an der Karosserie 40 des Fahrzeugs 14 befestigt. Die Vorrichtung 10 umfasst ein Haltemittel 16, das ein erstes Halteelement 18 und ein mit dem ersten Halteelement 18 zusammenwirkendes, zweites Halteelement 20 aufweist. Im vorliegenden Ausführungsbeispiel ist das erste Halteelement 18 vorzugsweise als Bolzen ausgebildet, der einen Auflageflansch 30 aufweist. Im vorliegenden Ausführungsbeispiel besteht das erste Halteelement 18 aus mindestens einem metallischen Werkstoff.

Um in einfacher Weise eine genaue und konstante Breite des Spaltes 44 einstellen zu können, weist die Vorrichtung 10 an einer der Lichtaustrittsscheibe 38 entgegengesetzten Seite des Leuchtengehäuses 32 der Leuchteneinheit 12 das vorzugsweise als Dom ausgebildete zweite Halteelement 20 auf. Im vorliegenden Ausführungsbeispiel besteht das zweite Halteelement 20 aus mindestens einem Kunststoff. Der Dom 20 steht an einer Rückseite des Reflektors 34 ab und ist vorzugsweise einstückig mit dem Leuchtengehäuse 32 ausgeführt. In dem Dom 20 ist ein Aufnahmeraum 24 mit einer der Karosserie 40 des Fahrzeugs 14 zugewandten Öffnung 46 ausgebildet, in welchem ein Binde/Klebemittel 22 untergebracht ist. Bevorzugt ist der Aufnahmeraum 24 topfförmig ausgebildet. Das in dem Aufnahmeraum 24 befindliche Binde/Klebemittel 22 reicht bis nahe an die Öffnung 46 des Aufnahmeraumes 24 heran. Im vorliegenden Ausführungsbeispiel handelt es sich bei dem Binde/Klebemittel 22 um einen Epoxid-Klebstoff, wobei auch andere einem Fachmann als sinnvoll erscheinende Binde/Klebemittel denkbar sind. Eine Längsachse 48 des Aufnahmeraumes 24 liegt spitzwinklig zu einer Längsachse 50 der Fassung 42 für das Leuchtmittel 36.

Das als Bolzen ausgeführte erste Halteelement 18 ist in dem Binde/Klebemittel 22 enthaltenden Aufnahmeraum 24 des zweiten Halteelements 20 mindestens teilweise aufgenommen, indem der Bolzen 18 durch die Öffnung 46 in den Aufnahmeraum 24 eingeführt wird. Der Auflageflansch 30 des Bolzens 18 auf dem Dom 20 bzw. auf dem Rand der Öffnung 46 bildet eine Auflagefläche gegenüber der Karosserie 40 in eingebautem Zustand der Leuchte, vorzugsweise einer Heckleuchte. Die Eintauchtiefe des als Bolzen ausgebildeten Halteelements 18 im Dom 20 ist dadurch nicht beeinträchtigt, so dass ein Toleranzausgleich in alle Richtungen erhalten bleibt.

Um eine Vorrichtung zum Befestigen einer Leuchteneinheit 12 an einem Fahrzeug 14 bereitzustellen, welche einfach und schnell herstellbar ist, ist erfindungsgemäß vorgesehen, dass das Binde/Klebemittel 22 mittels induktiver Erwärmung erwärmbar und damit aktivierbar ist.

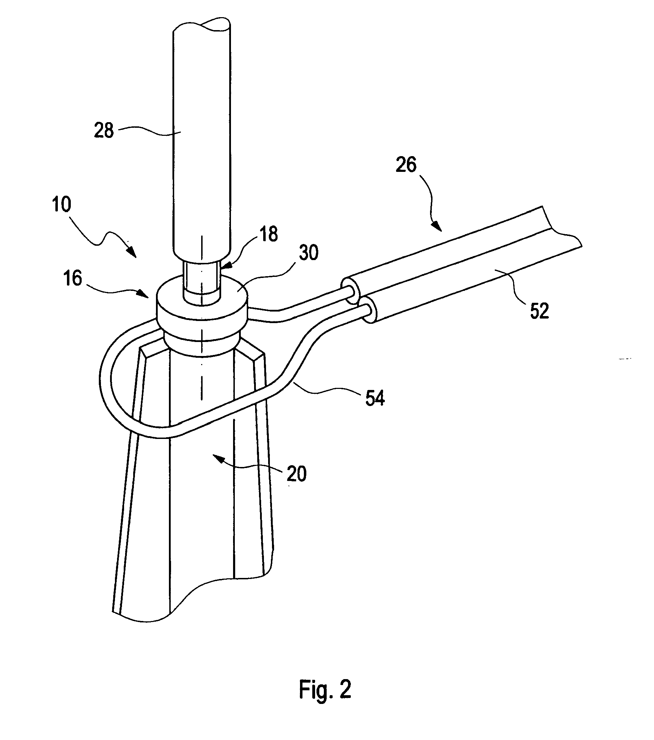

Im vorliegenden Ausführungsbeispiel ist das Binde/Klebemittel 22 über die induktive Erwärmung des ersten Halteelements 18 aktivierbar. Wie in Fig. 2 dargestellt wird das zweite Halteelement 20 zur induktiven Erwärmung des ersten Halteelements 18 von einer Induktionsspule 26 beaufschlagt. Hierzu weist die Induktionsspule 26 vorzugsweise einen stabförmigen Bereich 52 mit einem ringförmigen Ende 54 auf, welches auf das zweite Halteelement 20 überstülpbar ist, wodurch das ringförmige Ende 54 das zweite Halteelement 20 umgibt. Zur Regelung der Leistung der Induktionsspule 26 wird das erste Halteelement 18 von einer pyrometrischen Temperaturmesseinrichtung 28 beaufschlagt, indem die Messeinrichtung 28 an eine dem zweiten Halteelement 20 gegenüberliegenden Fläche des ersten Halteelements 18 zur Anlage kommt. Durch die induktive Erwärmung des ersten Halteelements 18 wird das Binde/Klebemittel 22 aktiviert. Anschließend erfolgt die Aushärtung des Binde/Klebemittels 22. Das erste Halteelement 18 wird bei ausgehärtetem Binde/Klebemittel 22 im Aufnahmeraum 24 des zweiten Halteelements 20 stoffschlüssig gehalten.

Bei der Herstellung der Leuchteneinheit 12 werden zunächst das Leuchtengehäuse 32 mit dem Reflektor 34 und die Lichtaustrittsscheibe 38 mit dem darin befindlichen Leuchtmittel 36 vormontiert. Anschließend werden die fertig montierte Leuchteneinheit 12 und das Anschlussteil 58 in eine Form gelegt, in der diese beiden Teile lagegenau zueinander ausgerichtet werden. In den Aufnahmeraum 24 des zweiten Halteelements 20 wird das Binde/Klebemittel 22 eingebracht. Anschließend wird das erste Halteelement 18 in das Binde/Klebemittel 22 eingetaucht. Die Ausrichtung der Teile erfolgt einfach und mit sehr hoher Genauigkeit. Da das erste Halteelement 18 erst nach dem Zusammenbau der Leuchteneinheit 12 angebracht wird, können die Einzel- und Fertigungstoleranzen in hohem Maße eliminiert werden. Nach Eintauchen des ersten Halteelements 18 in das Binde/Klebemittel 22 wird dieses erwärmt und damit aktiviert.

Die Lichtaustrittsscheibe 38 und das zweite Halteelement 20 ausbildende Leuchtengehäuse 32 werden bevorzugt im Spritzgießverfahren hergestellt, bedampft und miteinander verschweißt. Die beiden miteinander verschweißten Teile werden dann vorteilhaft über zwei Vorzugskanten an der Lichtaustrittsscheibe 38 zur späteren Lage im Fahrzeug 14 ausgerichtet. Die Halteelemente 18 können über eine Positioniervorrichtung, wie einen Handlingroboter, positioniert und eingebracht werden, wobei die Halteelemente 18 unterschiedlichste Gestaltungen haben können.
- 10: Vorrichtung
- 12: Leuchteneinheit
- 14: Fahrzeug
- 16: Haltemittel
- 18: erstes Halteelement (Bolzen)
- 20: zweites Halteelement (Dom)
- 22: Binde/Klebemittel
- 24: Aufnahmeraum
- 26: Induktionsspule
- 28: pyrometrische Temperaturmesseinrichtung
- 30: Auflageflansch
- 32: Leuchtengehäuse
- 34: Reflektor
- 36: Leuchtmittel
- 38: Lichtaustrittsscheibe
- 40: Karosserie
- 42: Fassung
- 44: Spalt
- 46: Öffnung
- 48: Längsachse (Aufnahmeraum)
- 50: Längsachse (Fassung)
- 52: stabförmiger Bereich
- 54: ringförmiges Ende
- 56: Einbauöffnung
- 58: Anschlussteil
- 60: Rippen

## Patentansprüche

1. Vorrichtung (10) zum mindestens teilweisen Befestigen einer Leuchteneinheit (12) an einem Fahrzeug (14) mit einem Haltemittel (16), das ein erstes Halteelement (18) und ein mit dem ersten Halteelement (18) zusammenwirkendes, zweites Halteelement (20) aufweist, wobei das erste Halteelement (18) in einem Binde/Klebemittel (22) enthaltenden Aufnahmeraum (24) des zweiten Halteelements (20) mindestens teilweise aufgenommen ist, und wobei das Binde/Klebemittel mittels Induktion erwärmbar und damit aktivierbar ist, **dadurch gekennzeichnet, dass** das erste Halteelement (18) aus mindestens einem metallischen Werkstoff besteht, so dass das Binde/Klebemittel (22) über die induktive Erwärmung des ersten Halteelements (18) erwärmbar und damit aktivierbar ist.

2. Vorrichtung nach Anspruch 1, **dadurch gekennzeichnet, dass** das zweite Halteelement (20) zur induktiven Erwärmung des ersten Halteelements (18) von einer Induktionsspule (26) beaufschlagbar ist.

3. Vorrichtung nach einem der vorhergehenden Ansprüche, **dadurch gekennzeichnet, dass** das erste Halteelement (18) von einer pyrometrischen Temperaturmesseinrichtung (28) beaufschlagbar ist, welche die Leistung der Induktionsspule (26) regelt.

4. Vorrichtung nach einem der vorhergehenden Ansprüche, **dadurch gekennzeichnet, dass** das erste Halteelement (18) bei aktiviertem Binde/Klebemittel (22) im Aufnahmeraum (24) stoffschlüssig gehalten ist.

5. Vorrichtung nach einem der vorhergehenden Ansprüche, **dadurch gekennzeichnet, dass** das erste Haltemittel (18) als Bolzen ausgeführt ist.

6. Vorrichtung nach einem der vorhergehenden Ansprüche, **dadurch gekennzeichnet, dass** das zweite Halteelement (20) als an der Leuchteneinheit (12) ausgebildeter Dom ausgeführt ist, in welchem der Aufnahmeraum (24) angeordnet ist.

7. Vorrichtung nach Anspruch 5 oder 6, **dadurch gekennzeichnet, dass** der Bolzen (18) einen Auflageflansch (30) aufweist.

8. Vorrichtung nach einem der vorhergehenden Ansprüche, **dadurch gekennzeichnet, dass** das zweite Halteelement (20) aus mindestens einem Kunststoff besteht.

9. Vorrichtung nach einem der vorhergehenden Ansprüche, **dadurch gekennzeichnet, dass** es sich bei dem BindelKlebemittel (22) um einen Epoxid-Klebstoff handelt.

10. Vorrichtung nach einem der vorhergehenden Ansprüche, **dadurch gekennzeichnet, dass** in dem Binde/Klebemittel (22) ferromagnetische Metallspäne enthalten sind.

11. Vorrichtung nach einem der vorhergehenden Ansprüche, **dadurch gekennzeichnet, dass** das Binde/Klebemittel (22) zur Verbesserung der Wärmeleitfähigkeit Metallpartikel enthält.

## Claims

1. Device (10) for at least partial securing of a lighting unit (12) to a vehicle (14) with a holding means (16) having a first holding element (18) and a second holding element (20) interacting with the first holding element (18), where the first holding element (18) is at least partially accommodated in a receiving space (24) of the second holding element (20) containing bonding/adhesive agent (22), and where the bonding/adhesive agent is heatable and hence activatable by induction, **characterized in that** the first holding element (18) comprises at least one metallic material such that the bonding/adhesive agent (22) is heatable and hence activatable by inductive heating of the first holding element (18).

2. Device according to Claim 1, **characterized in that** the second holding element (20) is subjectable to the action of an induction coil (26) for inductive heating of the first holding element (18).

3. Device according to one of the preceding claims, **characterized in that** the first holding element (18) is subjectable to the action of a pyrometric temperature measuring unit (28) which regulates the power of the induction coil (26).

4. Device according to one of the preceding claims, **characterized in that** the first holding element (18) is held in a material bond when the bonding/adhesive agent (22) is activated inside the receiving space (24).

5. Device according to one of the preceding claims, **characterized in that** the first holding element (18) is designed as a pin.

6. Device according to one of the preceding claims, **characterized in that** the second holding element (20) is designed as a mandrel provided on the lighting unit (12) and in which the receiving space (24) is arranged.

7. Device according to Claim 5 or 6, **characterized in that** the pin (18) has a contact flange (30).

8. Device according to one of the preceding claims, **characterized in that** the second holding element (20) comprises at least one plastic material.

9. Device according to one of the preceding claims, **characterized in that** the bonding/adhesive agent (22) is an epoxy adhesive.

10. Device according to one of the preceding claims, **characterized in that** the bonding/adhesive agent (22) contains ferromagnetic metal chips.

11. Device according to one of the preceding claims, **characterized in that** the bonding/adhesive agent (22) contains metal particles for improving thermal conductivity.

## Revendications

1. Dispositif (10) pour fixer au moins en partie une unité d'éclairage (12) sur un véhicule (14) avec un moyen de fixation (16) qui présente un premier élément de fixation (18) et un second élément de fixation (20) fonctionnant en interaction avec le premier élément de fixation (18), sachant que le premier élément de fixation (18) est au moins en partie logé dans un espace récepteur (24) du second élément de fixation (20) contenant un produit adhésif/liant (22), et que le produit adhésif/liant peut être chauffé par induction et ainsi activé, **caractérisé en ce que** le premier élément de fixation (18) est composé d'au moins un matériau métallique, si bien que le produit adhésif/liant (22) peut être chauffée et ainsi activé par le chauffage par induction du premier élément de fixation (18).

2. Dispositif selon la revendication 1, **caractérisé en ce que** le second élément de fixation (20) peut être soumis à une bobine d'induction (26) pour le chauffage par induction du premier élément de fixation (18).

3. Dispositif selon l'une des revendications précédentes, **caractérisé en ce que** le premier élément de fixation (18) peut être soumis à un dispositif pyrométrique de mesure de la température (28) qui règle la puissance de la bobine d'induction (26).

4. Dispositif selon l'une des revendications précédentes, **caractérisé en ce que** le premier élément de fixation (18) est maintenu par liaison de matière dans l'espace récepteur (24) lorsque le produit adhésif/liant (22) est activé.

5. Dispositif selon l'une des revendications précédentes, **caractérisé en ce que** le premier élément de fixation (18) est conçu sous forme de goujon.

6. Dispositif selon l'une des revendications précédentes, **caractérisé en ce que** le second élément de fixation (20) est conçu comme une coupole formée sur l'unité d'éclairage (12), coupole dans laquelle est disposé l'espace récepteur (24).

7. Dispositif selon la revendication 5 ou 6, **caractérisé en ce que** le goujon (18) présente une plaque d'appui (30).

8. Dispositif selon l'une des revendications précédentes, **caractérisé en ce que** le second élément de fixation (20) est composé d'au moins une matière plastique.

9. Dispositif selon l'une des revendications précédentes, **caractérisé en ce que** le produit liant/adhésif (22) est une colle époxy.

10. Dispositif selon l'une des revendications précédentes, **caractérisé en ce que** des copeaux métalliques ferromagnétiques sont contenus dans le produit adhésif/liant (22).

11. Dispositif selon l'une des revendications précédentes, **caractérisé en ce que** le produit liant/adhésif (22) comprend des particules métalliques destinées à améliorer la conductibilité thermique.
